# NEUE EUROPÄISCHE PATENTSCHRIFT

(11) **EP 0 204 151 B2**
(45) Veröffentlichungstag und Bekanntmachung des Hinweises auf die Entscheidung über den Einspruch: **10.12.1997**
(45) Hinweis auf die Patenterteilung: 27.11.1991
(21) Anmeldenummer: 86106002.8
(22) Anmeldetag: 01.05.1986
(51) Int. Cl.: B23Q 3/157, B23Q 37/00

(54) **Werkzeugmaschine**
Machine tool
Machine-outil

(30) Priorität: 01.06.1985 DE 3519706
(43) Veröffentlichungstag der Anmeldung: 10.12.1986
(73) Patentinhaber: Gebrüder Honsberg GmbH, D-42855 Remscheid (DE)
(72) Erfinder: Kölblin, Rolf, D-8036 Herrsching am Ammersee (DE); Schneider, Reinhard, D-5275 Bergneustadt 2 (DE); Burgtorf, Heinrich, D-5630 Remscheid 11 (DE); Peiss, Klaus, D-5632 Wermelskirchen (DE)
(74) Vertreter: Selting, Günther, Dipl.-Ing.

(56) Entgegenhaltungen:
- EP-A- 0 003 027
- EP-A- 0 133 456
- EP-A- 0 137 117
- DD-A- 220 545
- DE-A- 2 500 142
- DE-A- 2 636 473
- DE-A- 3 001 311
- DE-A- 3 001 396
- DE-A- 3 103 466
- DE-A- 3 501 113
- WERKSTATTSTECHNIK, ZEITSCHRIFT FÜR INDUSTRIELLE FERTIGUNG, Band 71, Nr. 1, Januar 1981, Seiten 39-45, Berlin, DE; K. TUFFENTSAMMER et al.: "Mehrspindliges Bohren mit automatischer Bohrbildänderung"
- PATENT ABSTRACTS OF JAPAN, Band 2, Nr. 47 (M-14), 29. März 1978, Seite 325 M 78; & JP-A-53 78 88 (MITSUBISHI JUKOGYO K.K.) 24-1-1978
- PATENT ABSTRACTS OF JAPAN, Band 5, Nr. 135 (M-85)[807], 27. August 1981; & JP-A-56 69 057 (TOYODA KOKI K.K.) 10-06-1981
- HELLER Prospekt, Bearbeitungszentrum BEA, Heller-Form 8-3342-8.73
- Werkstatt und Betrieb, 107 (1974) 8, s. 463-468.

## Beschreibung

Die Erfindung betrifft eine Werkzeugmaschine mit einem vertikalen Ständer, einem an dem Ständer angebrachten Kopfträger für mindestens einen angetriebenen Werkzeugkopf und mit einem Kopfwechsler, der mindestens einen Kopfgreifer aufweist, welcher in eine zur Übernahme des an dem Kopfträger lösbar befestigten Werkzeugkopfes geeignete Wechselposition bewegbar ist.

Aus dem Prospekt "HELLER" Bearbeitungszentrum BEA der Firma Gebr. Heller Maschinenfabrik GmbH aus August 1973 ist eine Werkzeugmaschine der im Oberbegriff des Patentanspruchs 1 angegebenen Art beschrieben. Diese Werkzeugmaschine weist einen ortsfesten Ständer auf, an dem ein Kopfträger vertikal verfahrbar ist. Der Ständer trägt in fester Höhe einen um eine vertikale Achse drehbaren Kopfwechsler, der mehrere Kopfgreifer aufweist, die einzeln in eine über der Führungsbahn des Kopfträgers befindliche Wechselposition bewegt werden können. An den Kopfgreifern sind Werkzeugköpfe in vertikalen Schienen geführt. Mit einem Hydrozylinder kann der in der Wechselposition befindliche Werkzeugkopf von oben ergriffen und nach Lösen von Riegeln des betreffenden Kopfgreifers von diesem Kopfgreifer entfernt und vor den Kopfträger gefahren werden. Danach wird er von dem Kopfträger erfaßt und festgehalten. Hierbei ist für die Übergabe von Werkzeugköpfen zwischen dem in der Wechselposition befindlichen Kopfgreifer und dem Kopfträger eine maschinenfeste Übergabevorrichtung in Form des Hydrozylinders erforderlich. Der Hydrozylinder muß an den betreffenden Werkzeugkopf angesetzt und mit diesem verriegelt werden, bevor die Übergabe vom Kopfgreifer an den Kopfträger erfolgt, und er muß nach erfolgter Übergabe wieder vom Werkzeugkopf entriegelt und gelöst werden. Diese Ver- und Entriegelungsvorgänge erfordern zusätzlichen Zeitaufwand und zusätzlich Riegelorgane an der Übergabevorrichtung und an jedem der Werkzeugköpfe.

Eine aus DD-A5-220 545 bekannte Werkzeugmaschine weist einen nicht drehbaren Ständer auf, an dem ein um eine vertikale Achse drehbarer Kopfwechsler gelagert ist, welcher um seinen Umfang verteilt mehrere Kopfgreifer aufweist. Der vertikale Ständer bzw. der Kopfträger enthalten Antriebseinrichtungen, an die der Werkzeugkopf, bei dem es sich beispielsweise um einen Spindelstock oder Bohrkopf handeln kann, angekuppelt wird. Der Kopfwechsler wird in diejenige Position gedreht, in der der für den Einsatz beabsichtigte Werkzeugkopf dem Werkstück zugewandt ist. Damit ist die Position des Kopfwechslers während des Bearbeitungsvorganges festgelegt und ein Austausch von Werkzeugköpfen an beliebigen Kopfträgern des Kopfwechslers ist während dieser Zeit nicht möglich. Der Austausch der Werkzeugköpfe zwischen dem Kopfwechsler und einem separat davon angeordneten Werkzeugkopfmagazin muß durch eine separate horizontal bewegbare Übergabevorrichtung erfolgen. Hierbei erfordert ein Wechsel der Werkzeugköpfe relativ viel Zeit, in der eine Werkstückbearbeitung nicht möglich ist. Ferner erfordert die Vorrichtung mit dem separaten Werkzeugkopfmagazin viel Platz.

Schließlich ist ein Werkzeugwechselsystem bekannt (DE-A-33 29 539), bei dem der vertikale Ständer, der einen Werkzeugkopf trägt, aus seiner Arbeitsstellung zurückbewegt werden kann. Im unteren Bereich des Ständers ist ein drehbarer Ring angeordnet, der mehrere Kopfgreifer trägt. Durch Drehung des Ringes um seine vertikale Achse känn der Werkzeugkopf in eine Ablageposition gebracht werden und durch weitere Drehung des Ringes kann ein anderer Werkzeugkopf an den Ständer angesetzt werden. Für den Werkzeugwechsel sind translatorische Bewegungen des Ständers und rotatorische Bewegungen des Ringes erforderlich. Auferdem müssen Hubbewegungen durchgeführt werden, um die Werkzeugköpfe an den Ständer ankoppein bzw. sie von diesem abkoppeln zu können.

Für Werzeugmaschinen besteht die Forderung eines flexiblen Einsatzes, d.h. es wird die Fähigkeit verlangt, daß die Werkzeugmaschine nach einer Programmsteuerung mit den verschiedensten Werkzeugköpfen oder Werkzeugen arbeiten kann, um unterschiedliche Bearbeitungsvorgänge durchzuführen. Der Begriff 'Werkzeugkopf" ist in diesem Zusammenhang allgemein zu verstehen. Er umfaßt jede Art von Werkzeugträgern mit festehenden oder bewegbaren Werkzeugen und insbesondere auch Spindelstöcke und Bohrköpfe. Ein Werkzeugkopf kann beispielsweise auch als Mehrspindelkopf ausgebildet sein.

Eine aus DE-A-3 001 396 (Fig. 3) bekannte Werkzeugmaschine hat einen Ständer, an dem ein Tragring in der Höhe verfahrbar ist. An dem Tragring, der um den Ständer herum drehbar ist, befinden sich Kopfgreifer, die jeweils einen Werkzeugkopf lösbar festhalten.

Der Erfindung liegt die Aufgabe zugrunde, eine Werkzeugmaschine zu schaffen, die bei einfachem Aufbau ihrer funktionswesentlichen Grundelemente ein schnelles Wechseln der Werkzeugköpfe ermöglicht.

Die Lösung dieser Aufgabe erfolgt erfindungsgemäß mit den Merkmalen des Patentanspruchs 1.

Bei der erfindungsgemäßen Werkzeugmaschine besteht die Grundeinheit aus einem vertikalen Ständer, der nicht um seine Vertikalachse drehbar sein muß. Dieser Ständer trägt einerseits mindestens einen Werkzeugkopf und er ist andererseits mit dem Kopfwechsler ausrüstbar, der sich um die Vertikalachse des Ständers drehen kann. Die erfindungsgemäße Werkzeugmaschine ist vorzugsweise Bestandteil eines Systems, das sich aus unterschiedlichen Komponenten wahlweise zusammensetzen und ausbauen läßt. Die Grundeinheit dieses Systems bildet der vertikale Ständer, der im einfachsten Fall nur einen einzigen Kopfträger und einen einzigen Werkzeugkopf aufweist.

Dieser vertikale Ständer kann z.B. in einer 3-Achsen-Maschine als in Z-Richtung verfahrbarer Schlitten benutzt werden. Ebenso kann der Kofträger an dem vertikalen Ständer in senkrechter Richtung verfahrbar sein. Die Besonderheit des erfindungsgemäßen Konzeptes besteht darin, daß die Grundeinheit, die sowohl bei den einfachen als auch bei den höheren Ausbaustufen Verwendung findet, ein nicht-drehbarer vertikaler Ständer oder Träger für den Kopfwechsler ist, der von einfachem Aufbau ist. Da die Grundeinheit (der vertikale Ständer) unkompliziert und mit geringen Kosten hergestellt werden kann, muß ein Anwender, der lediglich die Grundeinheit (ohne Wechselmechanismus für den Werkzeugkopf) einsetzen will, nicht eine Maschine erwerben, die zusästzliche Fähigkeiten aufweist, die jedoch nur bei höheren Ausbaustufen benötigt werden.

Ein besonderer Vorteil besteht ferner in dem einfachen Bewegungsablauf beim Wechseln der Werkzeugköpfe. Hierzu wird lediglich der Kopfwechsler gedreht, der an dem vertikalen Ständer angebracht ist. Der Ständer braucht zum Wechseln nicht translatorisch bewegt zu werden, mit Ausnahme der kurzen Bewegungen, die evtl. erforderlich sind, um das Werkzeug bzw. den Werkzeugkopf aus dem Kollisionsbereich des Werkstücks herauszubringen. Der Kopfwechsler hat eine relativ geringe Masse und kann daher leicht beschleunigt und abgebremst werden, um den Kopfgreifer in die Wechselposition zu bringen, in der er einen dem Kopfträger befestigten Werkzeugkopf übernehmen oder einen anderen Werkzeugkopf an den Kopfträger ansetzen kann. Die Antriebseinrichtungen für die Werkzeugköpfe befinden sich in dem nichtdrehbaren Ständer, auf dem der Kopfwechsler drehbar gelagert ist. Für das Wechseln eines Werkzeugkopfes wird keine separate Wechselmaschine, die neben oder hinter der Werkzeugmaschine angeordnet sein müßte, benötigt, sondern der Wechsler ist an dem vertikalen Ständer direkt angebracht, ohne daß er zusätzlichen Platz erfordern würde.

Bei der erfindungsgemäßen Werkzeugmaschine ermöglicht es der Kopfwechsler, einen Werkzeugkopf in die Wechselposition zu bringen und gleichzeitig einen anderen Werkzeugkopf an der der Arbeitsseite abgewandten Rückseite des Ständers abzulegen oder ihn dort an ein rechnergesteuertes Magazin zu übergeben. Die erfindungsgemäße Werkzeugmaschine zeichnet sich durch hohe Flexibilität und schnelle Wechselvorgänge aus. Die zum Wechseln eines Werkzeugkopfes zu beschleunigenden Massen sind jeweils äußerst gering. Den Zerspanungsaufgaben entsprechend können optimal angepaßte Werkzeugköpfe eingesetzt werden, z.B. Einspindelköpfe. Mehrspindelköpfe, Motorspindeln, Spindelköpfe für hohe Drehzahlen, Fräsköpfe, Plandrehköpfe, Feinbearbeitungsköpfe mit und ohne Stahlnachstellung, Meßköpfe, hydraulisch gelagerte Spindelstöcke usw. Auch der Einsatz von Spindelstöcken zur Aufnahme von rotierenden Werkstücken ist möglich.

Häufig besteht die Notwendigkeit, an einem Werkzeugkopf ein oder mehrere Werkzeuge auszuwechseln. Hierzu gibt es im Stand der Technik eine Reihe von Werkzeugwechselsystemen, die imstande sind, ein Werkzeug aus dem Werkzeugkopf herauszunehmen und ein anderes Werkzeug in den Werkzeugkopf einzusetzen.

Eine Werkzeugmaschine mit den Merkmalen des Oberbegriffs des Patentanspruchs 19 ist bekannt aus EP-A-0 003 027. Bei dieser Werkzeugmaschine ist der Werkzeugwechsler am Ständer gelagert. Dies hat zur Folge, daß ein Werkzeugwechsel immer nur dann möglich ist, wenn der Werkzeugkopf sich auf der dem Werkstück zugewandten Seite befindet.

Mit den Merkmalen des Anspruchs 19 wird erreicht, daß ein Werkzeugwechsel in jeder Drehposition des Werkzeugkopfes bzw. des Halters möglich ist. Die erfindungsgemäße Werkzeugmaschine ist mit einem Werkzeugwechsler ausgestattet sein. Der Werkzeugwechsler weist einen Halter auf, der an einem auf dem Ständer auswechselbar montierten Träger um eine horizontale erste Achse schwenkbar ist; der Greifarm des Werkzeugwechslers ist längs einer rechtwinklig zu der ersten Achse verlaufenden zweiten Achse bewegbar. Das Werkzeug wird aus dem Werkzeugkopf horizontal herausgezogen und vertikal in das Werkzeugmagazin hineingesteckt. Das Werkzeugmagazin benötigt keine klappbaren Werkzeugkassetten. Besonders vorteilhaft ist, daß bei einem Werkzeugwechsel der Werkzeugkopf nur für kurze Zeit von dem Werkstück entfernt werden muß und daß der zum Wechsein erforderliche Werkstückabstand so klein wie möglich gehalten werden kann. Das Werkzeug braucht nur aus dem Kollisionsbereich herausgefahren zu werden.

Im folgenden werden unter Bezugnahme auf die Zeichnungen Ausführungsbeispiele der Erfindung näher erläutert.

Es zeigen:
- Fig. 1: eine perspektivische Ansicht einer flexiblen Fertigungslinie aus mehreren Werkzeugmaschinen,
- Fign. 2 bis 4: perspektivische Darstellungen verschiedener Ausführungsformen des Kopfwechslers mit zusätzlichen Werkzeugwechsler,
- Fign. 5 bis 7: verschiedene Ausbaustufen des Werkzeugmaschinensystems unter Verwendung der gleichen Grundeinheit mit Wechsler,
- Fig. 8: eine schematische Darstellung einer Ausführungsform der Ablagevorrichtung und
- Fig. 9: eine weitere Ausführungsform der Ablagevorrichtung.

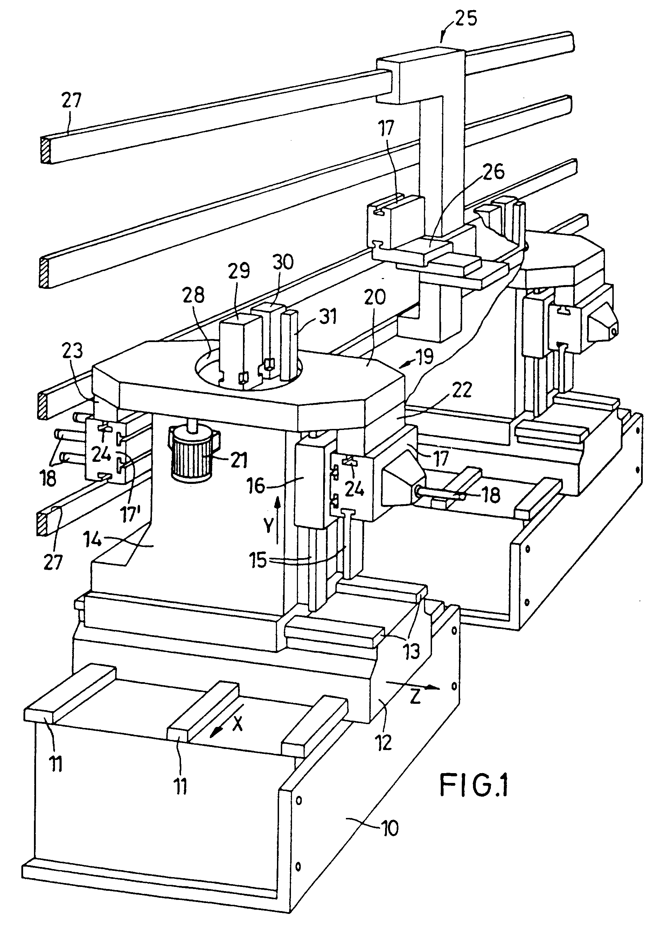

In Figur 1 sind mehrere entlang einer Bearbeitungslinie angeordnete Werkzeugmaschinen dargestellt. Die numerisch gesteuerten Werkzeugmaschinen weisen jeweils ein Maschinenbett 10 auf, welches das Basisteil der Werkzeugmaschine bildet. Das Maschinenbett 10 ist mit Führungsleisten 11 versehen, die in X-Richtung verlaufen. Auf den Führungsleisten 11 ist der horizontale Schlitten 12 in X-Richtung verfahrbar. Der Schlitten 12 weist seinerseits Führungsleisten 13 auf, die in Z-Richtung verlaufen. Die Z-Richtung bezeichnet die Richtung auf das (nicht dargestellte) Werkstück zu.

Auf den Führungsleisten 13 ist der vertikale Ständer 14 geführt. Der Ständer 14 weist Führungsleisten 15 auf, an denen der Kopfträger 16 in vertikaler Richtung (in Richtung der Y-Achse) bewegbar ist. Der Kopfträger 16 ist ein Schlitten, dessen Vorderseite dem Werkstück zugewandt ist und einen auswechselbaren Werkzeugkopf 17 trägt. Der Werkzeugkopf 17 ist beispielsweise ein Spindelstock der ein oder mehrere Bearbeitungswerkzeuge 18 aufnehmen kann. Der Kopfträger 16 ist mit einer Fangvorrichtung zum Ergreifen, Positionieren und Verriegeln des Werkzeugkopfes 17 versehen. Außerdem enthält der Kopfträger einen Kupplungsmechanismus zum Übertragen der Antriebskraft von einer im Innern des Ständers 14 befindlichen (nicht dargestellten) Antriebswelle auf den Werkzeugkopf 17.

Der Kopfwechsler 19 zum Wechseln des Werkzeugkopfes 17 besteht aus einem horizontalen Träger 20, der am oberen Ende des Ständers 14 gelagert ist und um eine vertikale Achse gedreht werden kann. Der Antrieb des Kopfwechslers 19 erfolgt über einen am Ständer 14 befestigten Motor 21, der beispielsweise ein Ritzel antreibt, das in einen Zahnkranz des Trägers 20 eingreift. Von zwei diametralen Stellen des Trägers 20 ragen Kopfgreifer 22 bzw. 23 nach unten. Jeder Kopfgreifer ist imstande, einen Werkzeugkopf 17 von oben her zu ergreifen. Der Werkzeugkopf 17 weist an seiner Oberseite eine Aufnahmevorrichtung 24 auf, in die ein Greiforgan des Kopfgreifers 22 einsteckbar ist. Das Greiforgan ist beispielsweise T-förmig und kann durch Drehen um seine vertikale Längsachse in der Fassung 24 verriegelt werden. Die Antriebseinrichtungen für den Verriegelungsmechanismus sind in dem Kopfgreifer 22 enthalten.

Wenn der Werkzeugkopf 17 von dem Kopfträger 16 entfernt werden soll, wird der Kopfträger 16 entlang der Y-Achse in eine Position gefahren in der der Werkzeugkopf 17 die für das Wechseln erforderliche Höhe hat. Der Kopfgreifer 22 befindet sich bereits, wie in Figur 1 dargestellt, in der Wechselposition. Sobald der Werkzeugkopf 17 an den Kopfgreifer 22 herangefahren ist, wird er von dem Greiforgan des Kopfgreifers erfaßt. Danach wird die Befestigung des Werkzeugkopfes am Kopfträger 16 gelöst, so daß der Werkzeugkopf 17 nunmehr nur noch an dem Kopfgreifer 22 hängt. Der Kopfträger 16 kann nun leer abgesenkt werden. Anschließend wird durch den Motor 21 der Kopfwechsler 19 um 180° gedreht, so daß nunmehr der Werkzeugkopf 17', der vorher in der Übergabeposition gestanden hatte (Fig. 1), in die Wechselposition gelangt. Nachdem der Kopfträger 16 hinter den Werkzeugkopf 17' gefahren ist, erfolgt die Verriegelung des Werkzeugkopfes am Kopfträger 16. Gleichzeitig wird die Antriebsverbindung für die Werkzeuge 18 hergestellt. Dann wird die Verriegelung des Kopfgreifers 22 gelöst, so daß der Kopfträger 16 zusammen mit dem Werkzeugkopf 17 entlang der Y-Achse verfahren und auf die benötigte Position eingestellt werden kann. Der sich nunmehr in der Ablageposition auf der Rückseite des Ständers 14 befindende Werkzeugkopf kann auf einer Ablagevorrichtung abgelegt werden. Diese Ablagevorrichtung ist im einfachsten Fall eine ortsfeste Platte, die mehrere Ablagepositionen aufweist. Durch entsprechendes Verfahren des Ständers 14 bzw. des Schlittens 12 kann der rückwärtige Kopfgreifer in jede der Ablagepositionen gebracht werden und einen Werkzeugkopf dort ablegen bzw. einen abgelegten Werkzeugkopf aufnehmen.

Bei dem Ausführungsbeispiel der Figur 1 ist eine andere Ablagevorrichtung vorhanden. Diese weist eine Übergabevorrichtung 25 mit einem horizontal und vertikal bewegbaren Übergabetisch 26 auf. Die Übergabevorrichtung 25 ist ein Schlitten, der entlang eines Regalsystems mittels Führungsleisten 27 parallel zu der Reihe von Werkzeugmaschinen verfahrbar ist. Der Übergabetisch 26 kann unter den in der Übergabeposition befindlichen Kopfträger einer jeden Werkzeugmaschine gefahren werden, um den betreffenden Werkzeugkopf aufzunehmen und in einem (nicht dargestellten) Regal abzulegen. Ferner kann der Übergabetisch 26 einen Werkzeugkopf 17 aus dem Regal entnehmen und ihn der Übergabeposition einer Werkzeugmaschine zuführen. Der betreffende Werkzeugkopf wird dann von dem Kopfgreifer 23 ergriffen und durch Drehen des Kopfwechslers 19 in die Wechselposition gebracht, in der der Werkzeugkopf in eine mit dem Kopfträger 16 kupplungsfähige Position gebracht wird. Mit der Übergabevorrichtung bzw. mit einem Handhabungsgerät können wahlweise auch Werkzeuge am rückwärtigen Werkzeugkopf und aus dem Magazin ein- und ausgewechselt werden und dem Regalsystem entnommen bzw. in ihm abgelegt werden.

Der Träger 20 weist im Mittelbereich eine Öffnung 28 auf, durch die verschiedene Antriebseinrichtungen des Ständers 14 hindurchragen. Zu diesen Antriebseinrichtungen gehören ein Motor 29 für den Bewegungsantrieb des Kopfträgers 16 entlang der Y-Achse, ein Motor 30 für den Spindelantrieb des Werkzeugkopfes 17 sowie ein Hydraulikzylinder 31 für den Gewichtsausgleich des Werkzeugkopfes 17.

Die Bewegungen entlang aller drei Achsen Y,X und Z werden von (nicht dargestellten) Wegmeßsystemen erfaßt und einer numerischen Steuereinrichtung zugeführt, die den Ablauf der Verarbeitungs- und Wechselvorgänge steuert.

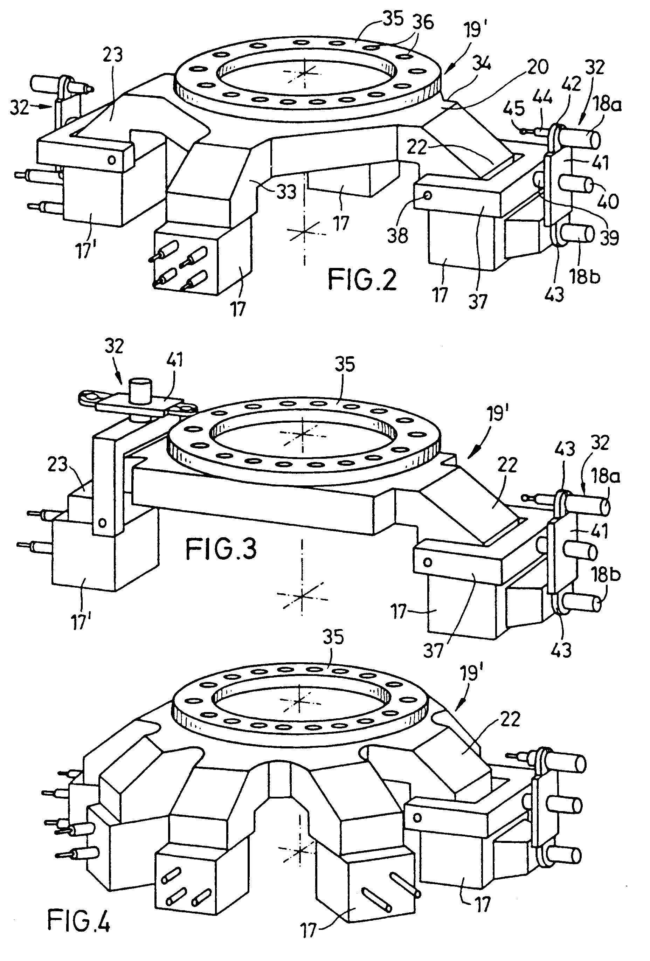

Bei den in Figur 1 dargestellten Maschinen ist es möglich, die einzelnen Werkzeugköpfe automatisch zu wechseln und die ausgewechselten Werkzeugköpfe abzulegen. Figur 2 zeigt einen Kopfwechsler 19', der zwei Paar von Kopfgreifern aufweist, wobei die Kopfgreifer 22, 23 des einen Paares jeweils mit einem Werkzeugwechsler 32 ausgestattet sind. Die beiden Kopfgreifer 22 und 23 liegen einander um 180° gegenüber und die Kopfgreifer 33 und 34 sind hierzu um 90° versetzt und liegen einander ebenfalls um 180° gegenüber. Der Kopfwechsler 19' weist an seiner Oberseite ein ringförmiges Werkzeugmagazin 35 auf, das aus einem drehbaren Ring oder einem umlaufenden Kettensystem bestehen kann. Das Werkzeugmagazin 35 ist mit zahlreichen vertikalen Öffnungen 36 zum Einstecken einzelner Werkzeuge versehen. Jede Öffnung 36 kann in eine Übergabeposition für den betreffenden Werkzeugwechsler 32 gebracht werden. Jeder Werkzeugwechsler 32 weist einen U-förmigen Bügel 37 auf, dessen Enden an dem zugehörigen Kopfgreifer 22 bzw. 23 angelenkt sind und der um eine horizontale Achse 38 schwenkbar ist. An dem Mittelteil des U-förmigen Halters 37 ist ein Linearantrieb 39 befestigt, der entlang der rechtwinklig zur Achse 38 verlaufenden Achse 40 bewegbar ist, und den Greifarm 41 trägt. Außerdem ist der Greifarm 41 um die Achse 40 herum schwenkbar. Der Greifarm 41 weist zwei in entgegengesetzte Richtungen weisende Greifsysteme auf, an deren Enden sich jeweils eine Greifhand 42 bzw. 43 befindet. Jede Greifhand ist imstande ein Werkzeug 18a bzw. 18b zu umgreifen und festzuhalten. Zu diesem Zweck weisen die Werkzeuge eine entsprechende Greifnut auf. Jede Greifhand ist mit zwei synchron gesteuerten Greiffingern versehen, die aus dem Greifarm 41 ausfahrbar sind, und sich beim Ausfahren aufeinander zu bewegen, um sich um das Werkzeug 18a bzw. 18b herumzuschließen. Die Werkzeuge 18a und 18b haben in bekannter Weise Steilkegel-Kupplungen 44 und Fangbolzen 45 zur Befestigung und Verriegelung im Innern des Werkzeugkopfes 17.

In dem in Fig. 2 dargestellten Zustand wird das Werkzeug 18b von der Greifhand 43 aus dem Werkzeugkopf 17 herausgenommen, indem der Greifarm 41 durch Betätigung des Linearantriebs 39 in Richtung der Achse 40 bewegt wird. Wenn das Werkzeug 18b herausgezogen ist, wird der Greifarm 41 um die Achse 40 herumgeschwenkt, so daß das Werkzeug 18a sich vor der Öffnung des Werkzeugkopfes 17 befindet. Durch Einziehen des Linearantriebs 39 wird das Werkzeug 18a dann in den Werkzeugkopf 17 eingefahren und antriebsseitig gekuppelt und verriegelt. Nunmehr wird der Halter 37 um die Achse 38 herum hochgeklappt und gleichzeitig wird der Linearantrieb 39 ausgefahren, so daß die eine Greifhand des Greifarmes 41 über die in der Übergabeposition befindliche Öffnung 36 des Werkzeugmagazins 35 gebracht wird. Durch entsprechende Betätigung des Linearantriebs 39 kann das Werkzeug dann in der Öffnung 36 versenkt werden. In der gleichen Weise wie die Ablage der Werkzeuge im Werkzeugmagazin 35 erfolgt, kann auch das Herausnehmen durchgeführt werden.

Bei dem Ausführungsbeispiel der Fig. 2 ist den einzelnen Kopfgreifern 22 und 23 je ein Werkzeugwechssler 32 zugeordnet. Der Werkzeugwechsel kann also jeweils erfolgen, wenn der betreffende Werkzeugkopf 17 sich an einem der Kopfgreifer befindet. Dies hat den Vorteil, daß der Werkzeugwechsel beispielsweise an dem Werkzeugkopf 17' vorgenommen werden kann, der sich am rückwärtigen Ende der Maschine befindet und zur Zeit unbenutzt ist.

Die Möglichkeit. zahlreiche Kopfgreifer 22, 23; 33, 34 vorzusehen hat den Vorteil, daß für bestimmte Bearbeitungsvorgänge unterschiedliche Werkzeugköpfe, die nacheinander zum Einsatz kommen, an dem Kopfträger angebracht werden können, und die sich durch unterschiedliche Werkzeugaufnahmen, Drehmomente, Drehzahlbereiche u.dgl. unterscheiden. Auf diese Weise lassen sich Werkzeugköpfe mit unterschiedlichen Spindelarten einsetzen, z.B. auch Werkzeugköpfe mit extrem schnellen oder langsamen Spindeln sowie mit speziellen Werkzeugaufnahmen für die Werkzeuge. Es können auch Duplex-Werkzeugwechsler benutzt werden, die zwei Werkzeuge gleichzeitig auswechseln.

Die erfindungsgemäße Werkzeugmaschine dient vorzugsweise zur Bearbeitung feststehender Werkstücke. Alle Bewegungs- und Bearbeitungsvorgänge werden auf der Seite der Werkzeugmaschine durchgeführt und nicht vom Werkstück.

Der Kopfwechsler 19' von Fig. 3 unterscheidet sich von demjenigen der Fig. 2 lediglich dadurch, daß anstelle von vier Kopfgreifern nur zwei Kopfgreifer 22 und 23 vorgesehen sind, während die Kopfgreifer 33 und 34 des Ausführungsbeispiels nach Fig. 2 fortgelassen sind. An jedem der Kopfgreifer 22 und 23 ist ein Werkzeugwechsler 32 in der zuvor beschriebenen Weise angebracht. Außerdem ist ein auf dem Kopfwechsler 19' drehbares Werkzeugmagazin 35 vorgesehen, mit dem die Werkzeugwechsler 32 zusammenarbeiten. Dadurch, daß mehrere Werkzeugwechsler vorhanden sind, besteht die Möglichkeit, Werkzeuge mit unterschiedlichen Werkzeugaufnahmen zu verwenden, wobei jeder Werkzeugwechsler an eine andere Art von Werkzeugaufnahme angepaßt ist.

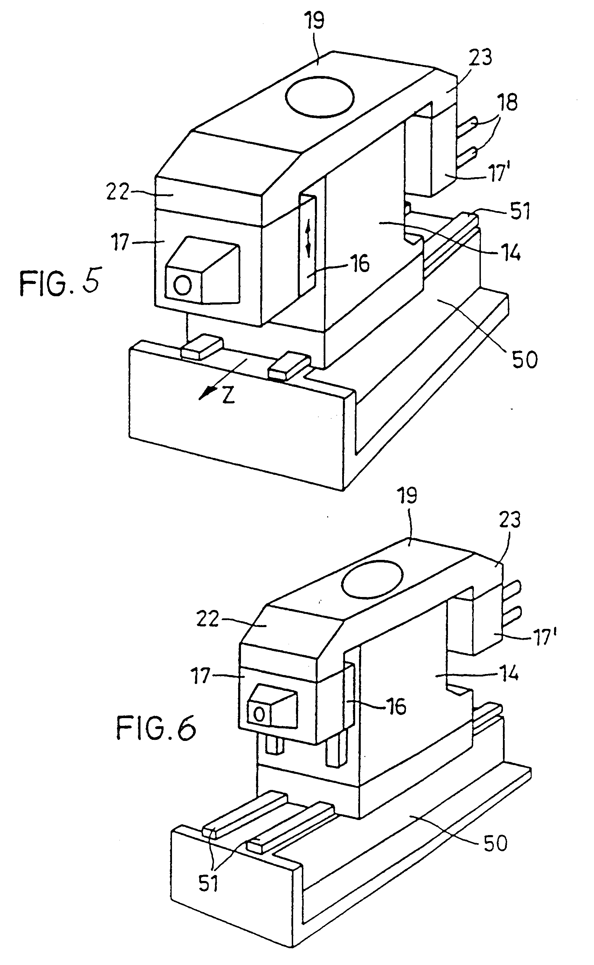

Der in Fig. 4 dargestellte Kopfwechsler 19' weist zahlreiche Kopfgreifer 22 auf, von denen jeder einen an ihm hängend zu befestigenden Werkzeugkopf 17 trägt. Der ringförmige Kopfwechsler 19' ist mit mehreren Kopfgreifern 22 ausgestattet, die sternförmig angeordnet sind.

Fig. 5 zeigt eine Ausbaustufe des Werkzeugmaschinensystems. Bei der dargestellten Maschine ist der vertikale Ständer 14 entlang von Führungsleisten 51 auf einem Maschinenbett 50 in Richtung der Z-Achse verfahrbar. Bei dieser Maschine sind Verstellungen in Richtung der X-Achse und der Y-Achse nicht möglich. Der Ständer 14 ist der gleiche wie bei der 3-Achsen-Maschine der Fig. 1.

Auf dem Ständer 14 ist der Kopfwechsler 19 angebracht ist, und der Werkzeugkopf 17 ist an dem vertikal verfahrbaren Kopfträger 16 angebracht. Jeder Kopfgreifer 22, 23 des Kopfwechslers 19 kann einen Werkzeugkopf 17 bzw. 17' hängend tragen und diesen Werkzeugkopf entweder vor den Kopfträger 16 oder in die rückwärtige Position schwenken.

Fig. 6 zeigt eine Ausbaustufe einer 2-Achsen-Maschine. Der Ständer 14 ist mit vertikalen Führungsleisten versehen, an denen der Kopfträger 16 in Y-Richtung, also vertikal, verfahren werden kann. Der Ständer 14 kann auf den Führungsleisten 51 des Maschinenbettes in Z-Richtung verfahren werden.

Auf dem oberen Ende des Ständers 14 ist ein Kopfwechsler 19 mit zwei Kopfgreifern 22, 23 drehbar angebracht.

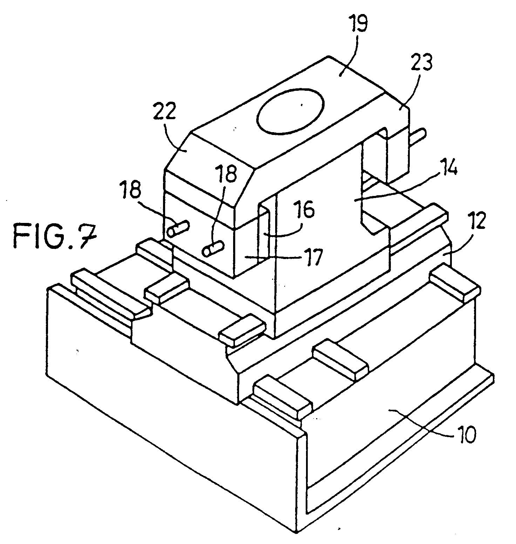

Auch die Maschinen nach Fig. 7 ist eine 2-Achsen-Maschine unter Verwendung desselben Ständers 14. Bei dieser Maschine ist der Werkzeugkopf 17 entlang der X-Achse und entlang der Z-Achse verschiebbar, jedoch nicht in Richtung der Y-Achse. Auf dem Maschinenbett 10 ist der Schlitten 12 in X-Richtung verfahrbar und auf dem Schlitten 12 ist der Ständer 14 in Z-Richtung verfahrbar. Bei der Maschine ist auf dem Ständer 14 ein Kopfwechsler 19 angebracht und der Ständer 14 weist einen Kopfträger 16 auf, an den von einem der Kopfgreifer 22, 23 ein Werkzeugkopf 17 übergeben werden kann.

Aus den Fign. 5 bis 7 erkennt man, insbesondere in Verbindung mit Fig.1, auf welch unterschiedliche Arten die Werkzeugmaschine unter Verwendung desselben Ständers, der nicht drehbar ist und eine extrem einfache Konstruktion aufweist, modifiziert werden kann, um unterschiedlichen Anforderungen gerecht zu werden. Der Ständer 14 ist auch nicht in der Höhe verfahrbar.

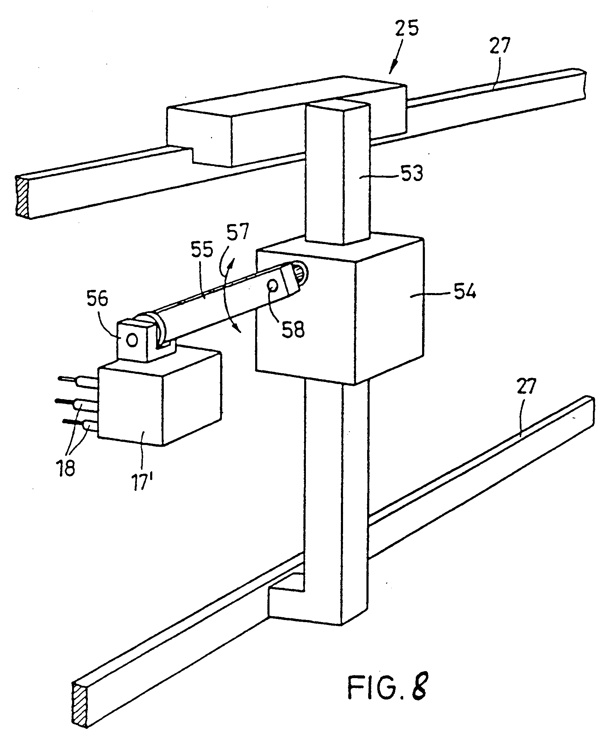

Fig. 8 zeigt ein Ausführungsbeispiel einer relativ einfachen Übergabevorrichtung 25, die in Verbindung mit der Werkzeugmaschine benutzbar ist, um Werkzeugköpfe 17' von dem Kopfgreifer 23, der sich nicht in der Arbeitsposition befindet, zu, übernehmen und in eine Ablagevorrichtung zu übertragen. Die Übergabevorrichtung 25 weist parallele Führungsleisten 27 auf, an denen ein Schlitten 53 horizontal verfahrbar ist. Längs eines vertikalen Balkens des Schlittens 53 ist ein weiterer Schlitten 54 vertikal verfahrbar. Von diesem Schlitten 54 steht ein parallelogrammgeführter Schwenkarm 55 ab. An dem freien Ende dieses Schwenkarmes 55 ist ein parallelgeführter Kopfgreifer 56 befestigt, der den Werkzeugkopf 17' von oben her ergreifen kann, um ihn von dem Kopfgreifer 23 der Werkzeugmaschine abzunehmen. Der an dem Kopfgreifer 56 hängende Werkzeugkopf 17' kann mit Hilfe des Schlittens 53 in ein Regal abgelegt oder zu einer entfernt angeordneten Station gefahren werden. Der Schwenkarm 55 kann in Richtung des Pfeiles 57 in einer vertikalen Ebene quer zu den Führungsleisten um die Achse 58 herum verschwenkt werden.

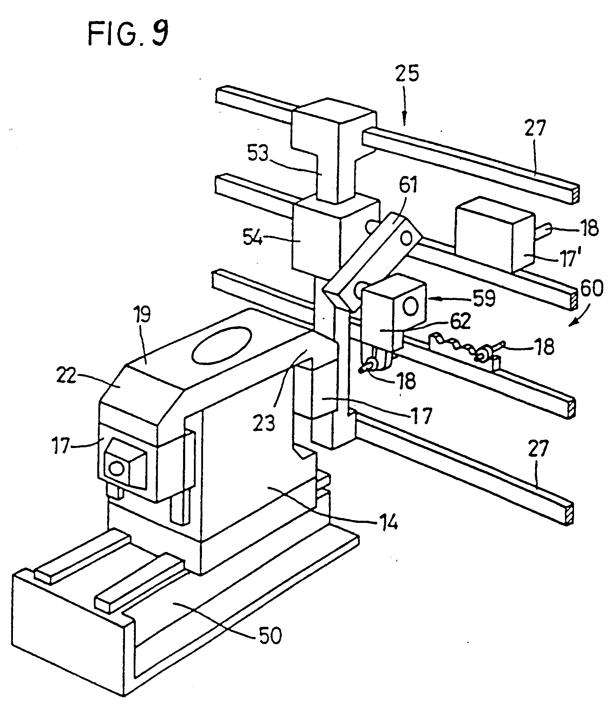

Die in Fig. 9 dargestellte Übergabevorrichtung weist ebenfalls horizontale Führungsleisten 27 auf, an denen der Schlitten 53 horizontal verfahrbar geführt ist. Am Schlitten 53 ist ein weiterer Schlitten 54 vertikal verfahrbar geführt. Der Schlitten 54 weist eine Handhabungsvorrichtung 59 auf, die imstande ist, entweder einen Werkzeugkopf 17' oder ein Werkzeug 18 von der Werkzeugmaschine abzunehmen und in das Regal 60 zu übertragen. In gleicher Weise kann die Übergabevorrichtung 25 Werkzeugköpfe oder Werkzeuge aus dem Regal 60 entnehmen und an die Werkzeugmaschine übertragen. Durch Computersteuerung werden die Speicherplätze, an denen die Werkzeuge bzw. Werkzeugköpfe abgelegt worden sind, gespeichert, sodaß ein Werkzeug oder Werkzeugkopf bei Bedarf aus der Ablageposition entnommen und der Maschine zugeführt werden kann. Das Handhabungssystem 59 besteht bei dem dargestellten Ausführungsbeispiel aus einem an dem Schlitten 54 um eine horizontale Achse schwenkbaren Arm 61 und einem an dem Arm 61 um eine weitere horizontale Achse schwenkbar angebrachten Kopfgreifer bzw. Werkzeuggreifern 62. Es ist auch möglich sowohl einen Kopfgreifer als auch einen Werkzeuggreifer vorzusehen und den jeweils benötigten Greifer durch Computersteuerung zum Einsatz zu bringen. Das Handhabungssystem 59 weist die nötigen Freiheitsgrade auf, um sämtliche erforderlichen Bewegungen in Richtung aller drei Achsen durchzuführen.

## Patentansprüche

1. Werkzeugmaschine mit
einem auf einem Maschinenbett (10,50) angeordneten vertikalen Ständer (14),
einem Kopfträger (16), der mindestens einen angetriebenen Werkzeugkopf (17,17') aufweist,
und einem Kopfwechsler (19), der mindestens einen Kopfgreifer (22,23) aufweist, welcher durch Drehung des Kopfwechslers um eine vertikale Achse in eine zur Übernahme des an dem Kopfträger (16) lösbar befestigten Werkzeugkopfes (17) geeignete Wechselposition bewegbar ist und in der Wechselposition den Werkzeugkopf (17) ergreift,
wobei der Kopfwechsler (19) auf dem Ständer (14) in fester Höhe gelagert ist
und der Kopfträger (16) am Ständer (14) vertikal geführt und in eine die Übergabe zum und vom Kopfgreifer (22,23) ermöglichende Wechselposition bewegbar ist,
**dadurch gekennzeichnet,**
daß der Ständer (14) entlang mindestens einer horizontalen Achse (X,Z) bewegbar ist, daß der Kopfgreifer (22,23) an dem Kopfwechsler (19) nach unten ragend angeordnet ist und den Werkzeugkopf oben ergreift, und daß der Kopfträger (16) hinter dem am Kopfwechsler (19) hängenden Werkzeugkopf zu dessen Übernahme hochfahrbar ist.

2. Werkzeugmaschine nach Anspruch 1, dadurch gekennzeichnet, daß der Kopfwechsler (19) mindestens ein Paar Kopfgreifer (22,23;33,34) aufweist, die - bezogen auf die vertikale Drehachse des Kopfwechslers (19) - um 180° versetzt zueinander angeordnet sind.

3. Werkzeugmaschine nach Anspruch 2, dadurch gekennzeichnet, daß dann, wenn sich der eine Kopfgreifer (22) des Paares in der Wechselposition befindet, der andere Kopfgreifer (23) in einer Übergabeposition ist, und daß unter dem in der Übergabeposition befindlichen Kopfgreifer (23) eine Ablagevorrichtung angeordnet ist.

4. Werkzeugmaschine nach Anspruch 3, dadurch gekennzeichnet, daß die Ablagevorrichtung einen ortsfesten Ablagetisch aufweist.

5. Werkzeugmaschine nach Anspruch 3 oder 4, dadurch gekennzeichnet, daß die Ablagevorrichtung eine längs eines Regals verfahrbare Übergabevorrichtung aufweist, die zwischen der Übergabeposition und zahlreichen verschiedenen Ablagepositionen bewegbar ist.

6. Werkzeugmaschine nach Anspruch 3 oder 4, dadurch gekennzeichnet, daß die Übergabevorrichtung einen horizontal bewegbaren Übergabetisch (26) aufweist.

7. Werkzeugmaschine nach einem der Ansprüche 1 bis 6, dadurch gekennzeichnet, daß jeder Werkzeugkopf (17,17') an seiner Oberseite mindestens eine Fassung (24) aufweist, in die ein Greiforgan des Kopfgreifers (22,23) einsteckbar und verriegelbar ist.

8. Werkzeugmaschine nach einem der Ansprüche 1 bis 7, dadurch gekennzeichnet, daß der Kopfträger (16) an seiner dem Ständer (14) abgewandten Vorderseite eine Fangvorrichtung zum Ergreifen und Verriegeln des an dem in der Wechselposition befindlichen Kopfgreifer (22) hängenden Werkzeugkopfes (17) aufweist.

9. Werkzeugmaschine nach Anspruch 2, dadurch gekennzeichnet, daß der Kopfwechsler (19) mindestens zwei umfangsmäßig verteilt angeordnete Paare von Kopfgreifern (22,23;33,34) aufweist.

10. Werkzeugmaschine nach einem der Ansprüche 1 bis 9, dadurch gekennzeichnet, daß der Kopfwechsler (19) als Rahmen ausgebildet ist, der über dem oberen Ende des Ständers (14) einen Ausschnitt (28) aufweist, durch den an dem Ständer befestigte Antriebseinrichtungen (29,30,31) hindurchragen.

11. Werkzeugmaschine nach einem der Ansprüche 1 bis 10, dadurch gekennzeichnet, daß der Kopfwechsler (19') ein um die Kopfwechsler-Drehachse separat drehbares Werkzeugmagazin (35) mit zahlreichen Aufnahmevorrichtungen (36) enthält.

12. Werkzeugmaschine nach Anspruch 11, dadurch gekennzeichnet, daß je mindestens einem Kopfgreifer (22,23) ein Werkzeugwechsler (32) zugeordnet ist, der einen an dem Kopfwechsler um eine horizontale erste Achse (38) schwenkbaren Halter (37) aufweist, an dem ein Greifarm (41) längs einer rechtwinklig zu der ersten Achse (38) verlaufenden zweiten Achse (40) bewegbar ist.

13. Werkzeugmaschine nach Anspruch 12, dadurch gekennzeichnet, daß der rechtwinklig zu der zweiten Achse (40) verlaufende Greifarm (41) an jedem Ende eine Greifhand (42,43) aufweist, und so lang ist, daß bei hochgeschwenktem Halter (37) eine Greifhand ein im Werkzeugmagazin (35) enthaltenes Werkzeug (18) greift und daß bei heruntergeschwenktem Halter (37) eine Greifhand (43) ein im Werkzeugkopf (17) steckendes Werkzeug (18b) ergreift.

14. Werkzeugmaschine nach Anspruch 13, dadurch gekennzeichnet, daß jede Greifhand (42,43) zwei synchron gesteuerte Greiffinger aufweist.

15. Werkzeugmaschine nach einem der Ansprüche 1 bis 4, dadurch gekennzeichnet, daß der Ständer (14) ein starres Gehäuse mit einer an der Vorderseite vorgesehenen, vertikalen Führungsbahn (15) für einen Schlitten aufweist.

16. Werkzeugmaschine nach Anspruch 15, dadurch gekennzeichnet, daß der Ständer (14) auf Schienen (13) parallel zur Bearbeitungsachse bewegbar ist.

17. Werkzeugmaschine nach Anspruch 16, dadurch gekennzeichnet, daß der Ständer (14) auf einem horizontalen Schlitten (12) bewegbar ist, der quer zur Bearbeitungsachse auf einem Sockel (10) geführt ist.

18. Werkzeugmaschine nach einem der Ansprüche 1 bis 17, dadurch gekennzeichnet, daß der Kopfträger (16) eine thermostabile Aufhängung für die Werkzeugköpfe aufweist, die derart ausgebildet ist, daß die Werkzeugkopfachse bei thermischen Änderungen ihre Lage beibehält.

19. Werkzeugmaschine mit einem vertikalen Ständer (14), an dem ein mindestens ein angetriebenes Werkzeug (18) tragender vertikal geführter Werkzeugkopf (17) angebracht ist, einem relativ zu dem Ständer (14) drehbaren Werkzeugmagazin (35) und mit einem Werkzeugwechsler (32), der mindestens einen Greifarm (41) aufweist, welcher in eine zur Übernahme des an dem Werkzeugkopf (17) lösbar befestigten Werkzeugs (18b) geeignete Wechselposition schwenkbar ist, wobei der Werkzeugwechsler (32) einen den Greifarm (41) tragenden Werkzeughalter (37) aufweist, der um eine horizontale erste Achse (38) schwenkbar ist und der Greifarm (41) längs einer rechtwinklig zu der ersten Achse (38) verlaufenden zweiten Achse (40) bewegbar und um diese zweite Achse (40) drehbar ist,
**dadurch gekennzeichnet**,
daß auf dem Ständer in fester Höhe ein Kopfwechsler (19') vorgesehen ist, der einen drehbaren Träger (20) mit mindestens einen Kopfgreifer (22,23,33,34) aufweist und in eine zur Übernahme des an einem Kopfträger (16) lösbar befestigten Werkzeugkopfes (17) geeignete Wechselposition drehbar ist, daß das Werkzeugmagazin auf dem Träger (20) drehbar angeordnet ist und daß der Werkzeughalter (37) am Träger (20) um die erste Achse (38) herum schwenkbar ist.

20. Werkzeugmaschine nach Anspruch 19, dadurch gekennzeichnet, daß der Träger (20) mehrere Kopfgreifer (22,23,33,34) für jeweils einen Werkzeugkopf (17,17') aufweist und an mindestens einem Kopfgreifer ein Werkzeugwechsler (32) angebracht ist.

21. Werkzeugmaschine nach Anspruch 19 oder 20, dadurch gekennzeichnet, daß der Träger (20) in fester Höhe an dem Ständer (14) angebracht ist und daß an dem Ständer (14) ein in der Höhe verfahrbarer Kopfträger (16) angebracht ist, der einen Werkzeugkopf (17) von dem Kopfgreifer (22,23 33,34) des Trägers (20) übernehmen kann.

## Claims

1. A machine tool comprising
a vertical post (14) movable on a machine bed (10, 50),
a head carrier (16) having at least one driven tool head (17,17'),
and a head changer (19) having at least one head gripper (22,23) movable by rotation of said head changer about a vertical axis into a changing position suited for the delivery of the tool head (17) provided detachably at the head carrier (16), and which seizes said tool head (17) in said changing position,
the head changer (19) being supported on said post (14) at a fixed height,
and said head carrier (16) being guided vertically at said post (14) and being movable into a changing position allowing the delivery from and to said head gripper (22, 23),
characterized in
that said post (14) is movable along at least one horizontal axis (X, Z), said head gripper (22, 23) is provided on said head changer (19) projecting downward therefrom and gripping said tool head at the top, and that said head carrier (16) may be raised behind said tool head hanging at said head changer (19) to take over the former.

2. The machine tool as defined in claim 1, characterized in that the head changer (19) includes at least one pair of head grippers (22,23; 33,34) which - relative to the vertical axis of rotation of the head changer (19) - are mutually offset by 180°.

3. The machine tool as defined in claim 2, characterized in that if one head gripper (22) of said one pair is in the changing position, the other head gripper (23) is in the delivery position and that a depositing means is arranged beneath the head gripper (23) taking the delivery position.

4. The machine tool as defined in claim 3, characterized in that the depositing means comprises a stationary deposit table.

5. The machine tool as defined in claim 3 or 4, characterized in that the depositing means includes a delivery means movable along a rack and travelling between the delivery position and a plurality of different deposit positions.

6. The machine tool as defined in claim 3 or 4, characterized in that the delivery means contains a horizontally movable delivery table (26).

7. The machine tool as defined in one of claims 1 to 6, characterized in that the upper side of each tool head (17,17') comprises at least one mounting (24) for the insertion and locking of a gripping member of the head gripper (22,23).

8. The machine tool as defined in one of claims 1 to 7, characterized in that the front side of the head carrier (16) averted from the post (14) contains a catch means for seizing and locking the tool head (17) pending at the head gripper (22) situated in the changing position.

9. The machine tool as defined in claim 2, characterized in that the head changer (19) contains at least two peripherally distributed pairs of head grippers (22,23; 33,34).

10. The machine tool as defined in one of claims 1 to 9, characterized in that the head changer (19) is in the the form of a frame which contains above the upper end of post (14) a cut-out (28) through which protrude driving means (29,30,31) secured to the post.

11. The machine tool as defined in one of claims 1 to 10, characterized in that the head changer (19') contains a tool magazine (35) separately rotatable about the axis of rotation of the head changer and including a plurality of receiving means (36).

12. The machine tool as defined in claim 11, characterized in that a tool changer (32) assigned to at least one head gripper (22,23), each comprising a holder (37) swivable at the head changer about a horizontal first axis (38), at which a gripping arm (41) is movable along a second axis (42) extending rectangularly to the first axis (38).

13. The machine tool as defined in claim 12, characterized in that each end of the the gripping arm (41) extending rectangularly to the second axis (40) comprises a gripping hand (42,43) and is of such a length that, in case of a tilted-up holder (37), one gripping hand engages a tool (18) contained in the tool magazine (35) while, in case of a tilted-down holder (37), one gripping hand (43) engages a tool (18b) inserted in the tool head (17).

14. The machine tool as defined in claim 13, characterized in that each gripping hand (42,43) includes two synchronously controlled gripping fingers.

15. The machine tool as defined in one of claims 1 to 4, characterized in that the post (14) comprises a rigid housing having at its front side a vertical guideway (15) for a carriage.

16. The machine tool as defined in claim 15, characterized in that the post (14) is movable on rails (13) in parallel to the processing axis.

17. The machine tool as defined in claim 16, characterized in that the post (14) is movable on a horizontal carriage (12) guided transversely to the processing axis on a base (10).

18. The machine tool as defined in one of claims 1 to 17, characterized in that the head carrier (16) contains a thermostable suspension for the tool heads which is so designed that the tool head axis maintains its position in case of thermal fluctuations.

19. A machine tool comprising a vertical post (14) having secured thereto at least one vertically guided tool head (17) supporting a driven tool (18), a tool magazine (35) rotatable relative to the post (14), and a tool changer (32) which includes at least one gripping arm (41) which is swivable into a changing position suitable for the receipt of the tool (18b) detachably secured to the tool head (17), the tool changer (32) having a tool holder (37) supporting the gripping arm (41) and being pivotal about a horizontal first axis (38), and the gripping arm (41) being movable along a second axis (40) extending rectangularly relative to the first axis (38), the gripping arm being rotatable about the second axis (40),
characterized in
that a head changer (19') is provided at the post (14) at a fixed height, the head changer having a rotatable support (20) with at least one head gripper (22, 23, 33, 34) and is pivotable into a changing position for delivery of the tool head (17) removably fixed to a head carrier (16), that the tool magazine is arranged for rotation on the support (20), and that the tool holder (37) is pivotable on the support (20) about the first axis (38).

20. The machine tool as defined in claim 19, characterized in that the support (20) has a plurality of head grippers (22, 23, 33, 34) for one tool head (17, 17'), respectively, and that a tool changer (32) is provided at least at one head gripper.

21. The machine tool as defined in claim 19 or 20, characterized in that the support (20) is mounted on the post (14) at a fixed height and that a head carrier (16) is provided for displacement in height along the post (14), which may receive a tool head (17) from the head gripper (22, 23, 33, 34) of the support (20).

## Revendications

1. Machine-outil comportant
un montant vertical (14) agencé sur un banc (10, 50) de machine;
un support (16) de tête qui comporte au moins une tête (17, 17') d'outil entraînée
et un dispositif (19) de changement de tête qui comporte au moins un dispositif (22, 23) de saisie de tête qui est mobile, par rotation du dispositif de changement de tête autour d'un axe vertical, vers une position de changement appropriée pour recevoir la tête (17) de machine-outil fixée de façon démontable sur le support (16) de tête et qui, dans la position de changement, saisit la tête (17) d'outil
le dispositif (19) de changement de tête étant monté à une hauteur fixe sur le montant (14)
et le support (16) de tête étant guidé verticalement sur le montant (14) et étant mobile vers une position de changement permettant le transfert vers le dispositif (22, 23) de saisie de tête ou à partir de celui-ci,
**caractérisée en ce que**
le montant vertical (14) est mobile le long d'au moins un axe horizontal (X, Y), en ce que le dispositif (22,23) de saisie de tête est agencé sur le dispositif (19) de changement de tête en faisant saillie vers le bas et saisit à la partie supérieure la tête d'outil, et ce que le support (16) de tête peut être élevé derrière la tête d'outil suspendue au dispositif (19) de changement de tête pour recevoir cette dernière.

2. Machine-outil selon la revendication 1, caractérisée en ce que le dispositif (19) de changement de tête comporte au moins une paire (22, 23; 33, 34) de dispositifs de saisie de tête qui sont décalés l'un par rapport à l'autre de 180° par rapport à l'axe de rotation vertical du dispositif (19) de changement de tête.

3. Machine-outil selon la revendication 2, caractérisée en ce que, lorsque le premier dispositif (22) de saisie de tête de la paire se trouve dans la position de changement, l'autre dispositif (23) de saisie de tête se trouve dans une position de transfert et en ce qu'un dispositif de dépôt est disposé au-dessous du dispositif (23) de saisie de tête qui se trouve dans la position de transfert.

4. Machine-outil selon la revendication 3, caractérisée en ce que le dispositif de dépôt comporte une table fixe de dépôt.

5. Machine-outil selon la revendication 3 ou 4, caractérisée en ce que le dispositif de dépôt comporte un dispositif de transfert, mobile le long d'un rayonnage, qui peut être déplacé entre la position de transfert et de nombreuses positions de dépôt diverses.

6. Machine-outil selon la revendication 3 ou 4, caractérisée en ce que le dispositif de transfert comporte une table de transfert (26) mobile horizontalement.

7. Machine-outil selon l'une des revendications 1 à 6, caractérisée en ce que chaque tête (17, 17') d'outil comporte, sur son côté supérieur, au moins une monture (24) dans laquelle peut être enfoncé et verrouillé un organe de saisie du dispositif (22, 23) de saisie de tête.

8. Machine-outil selon l'une des revendications 1 à 7, caractérisée en ce que le support (16) de tête présente, sur son côté avant tourné vers le montant (14), un dispositif de préhension pour saisir et verrouiller la tête (17) d'outil suspendue au dispositif (22) de tête qui se trouve dans la position de changement.

9. Machine-outil selon la revendication 2, caractérisée en ce que le dispositif (19) de changement de tête comporte au moins deux paires de dispositifs (22, 23; 33, 34) de saisie de tête disposées de façon répartie sur sa périphérie.

10. Machine-outil selon l'une des revendications 1 à 9, caractérisée en ce que le dispositif (19) de changement de tête est réalisé sous forme de cadre qui présente au-dessus de l'extrémité supérieure du montant (14) une découpe (28) à travers laquelle font saillie des dispositifs (29, 30, 31) d'entraînement fixés sur le montant.

11. Machine-outil selon l'une des revendications 1 à 10, caractérisée en ce que le dispositif (19') de changement de tête comprend un magasin (35) d'outils, pourvu de nombreux dispositifs (36) de réception, qui peut tourner séparément autour de l'axe de rotation du dispositif de changement de tête.

12. Machine-outil selon la revendication 11, caractérisée en ce que, à chaque dispositif (22, 23) de saisie de tête, est associé au moins un dispositif (32) de changement d'outil qui comporte un support (37) qui peut pivoter sur le dispositif de changement de tête autour d'un premier axe horizontal (38) et sur lequel un bras de saisie (41) est mobile le long d'un deuxième axe (40) de tracé perpendiculaire au premier axe (38).

13. Machine-outil selon la revendication 12, caractérisée en ce que le bras de saisie (41) se déplaçant perpendiculairement au deuxième axe (40) présente à chaque extrémité une main de saisie (42, 43) et est suffisamment long pour que, lorsque le support (37) est pivoté vers le haut, une main de saisie saisisse un outil (38) contenu dans le magasin (35) d'outils et que, lorsque le support (37) est pivoté vers le bas, une main de saisie (43) saisisse un outil (18b) s'enfonçant dans la tête (17) d'outil.

14. Machine-outil selon la revendication 13, caractérisé en ce que chaque main de saisie (42, 43) comporte deux doigts de saisie commandés de façon synchrone.

15. Machine-outil selon l'une des revendications 1 à 4, caracterisée en ce que le montant (14) comporte un boîtier rigide pourvu d'une voie de guidage verticale (15) prévue sur sa face avant et destinée à un chariot.

16. Machine-outil selon la revendication 15, caractérisée en ce que le montant (14) est mobile sur des rails (13) parallèlement à l'axe d'usinage.

17. Machine-outil selon la revendication 16, caractérisée en ce que le montant (14) est mobile sur un chariot horizontal (12) qui est guidé sur un socle (10) transversalement à l'axe d'usinage.

18. Machine-outil selon l'une des revendications 1 à 17, caractérisée en ce que le support (16) de tête comporte, pour les têtes d'outil, une suspension thermostable qui est réalisé de telle manière que l'axe de tête d'outil maintienne sa position en cas de variation thermique.

19. Machine-outil comportant un montant vertical (14) sur lequel est montée une tête (17) d'outil guidée verticalement supportant au moins un outil entraîné (18), un magasin (35) d'outils pouvant tourner par rapport au montant (14) et un dispositif (32) de changement d'outil qui comporte au moins un bras de saisie (41) qui peut pivoter dans une position de changement appropriée à recevoir l'outil (18b) fixé de façon démontable sur la tête (17) d'outil, le dispositif (32) de changement d'outil comportant un support (37) d'outil qui porte le bras de saisie (41) et peut pivoter autour d'un premier axe horizontal (38), et le bras de saisie (41) étant mobile le long d'un deuxième axe (40) de tracé perpendiculaire au premier axe (38) et pouvant tourner autour de ce deuxième axe (40),
**caractérisée**
en ce qu'il est prévu sur le montant, à une hauteur fixe, un dispositif (19) de changement de tête qui comporte un support rotatif (20) pourvu au moins d'un dispositif (22, 23, 33, 34) de saisie de tête et qui peut tourner dans une position appropriée pour recevoir la tête (17) fixée de façon démontable sur un support (16) de tête, en ce que le magasin d'outils est disposé à rotation sur le support (20) et en ce que le support (37) d'outil peut pivoter sur le support (20) autour du premier axe (38).

20. Machine-outil selon la revendication 19, caractérisée en ce que le support (20) comporte plusieurs dispositifs (22, 23; 33, 34) de saisie de tête, chacun pour une tête (17, 17') d'outil, et un dispositif (32) de changement d'outil est disposé au moins sur un support de têtes.

21. Machine-outil selon la revendication 19 ou 20, caractérisée en ce que le support (20) est monté à une hauteur fixe sur le montant (14) et en ce qu'un support (16) de tête mobile en hauteur, qui peut recevoir une tête (17) d'outil depuis le dispositif (22, 23; 33, 34) de saisie de tête du support (20), est monté sur le montant (14).
